(19) Europäisches Patentamt

European Patent Office

Office européen des brevets

(11) **EP 0 748 500 B1**

(12) **EUROPEAN PATENT SPECIFICATION**

(45) Date of publication and mention
of the grant of the patent:
**19.04.2006 Bulletin 2006/16**

(51) Int Cl.:
**G10L 17/00** *(2006.01)*

(21) Application number: **95913980.9**

(22) Date of filing: **28.02.1995**

(86) International application number:
**PCT/US1995/002801**

(87) International publication number:
**WO 1995/023408 (31.08.1995 Gazette 1995/37)**

(54) **SPEAKER IDENTIFICATION AND VERIFICATION METHOD AND SYSTEM**

VERFAHREN UND VORRICHTUNG ZUR SPRECHERERKENNUNG UND -VERIFIZIERUNG

PROCEDE ET SYSTEME D'IDENTIFICATION ET DE VERIFICATION DE LA PERSONNE QUI PARLE

(84) Designated Contracting States:
**AT BE CH DE DK ES FR GB GR IE IT LI LU MC NL
PT SE**
Designated Extension States:
**LT SI**

(30) Priority: **28.02.1994 US 203988**

(43) Date of publication of application:
**18.12.1996 Bulletin 1996/51**

(73) Proprietor: **RUTGERS UNIVERSITY
New Brunswick, NJ 08903 (US)**

(72) Inventors:
 • **MAMMONE, Richard, J.
Bridgewater, NJ 08807 (US)**
 • **ASSALEH, Khaled, T.
Tempe,Arizona 85282 (US)**

(74) Representative: **Guerre, Dominique et al
Cabinet Germain et Maureau,
12, rue Boileau,
BP 6153
69466 Lyon Cedex 06 (FR)**

(56) References cited:
| | |
|---|---|
| US-A- 4 058 676 | US-A- 4 653 097 |
| US-A- 4 752 958 | US-A- 4 837 830 |
| US-A- 5 131 043 | US-A- 5 146 539 |

 • **ASSALEH K T ET AL: "ROBUST CEPSTRAL FEATURES FOR SPEAKER IDENTIFICATION" 19 April 1994 , PROCEEDINGS OF THE INTERNATIONAL CONFERENCE ON ACOUSTICS, SPEECH, SIGNAL PROCESSING (ICASSP), SPEECH PROCESSING 1. ADELAIDE, APR. 19 - 22, 1994, VOL. VOL. 1, PAGE(S) I-129 - I-132 , INSTITUTE OF ELECTRICAL AND ELECTRONICS ENGINEERS XP000529373 * page I-129, right-hand column, line 34 - page I-132, left-hand column, line 34; figures 1,3,4 ***
 • **SEIICHIRO HANGAI ET AL: "SPEAKER IDENTIFICATION BASED ON MULTIPULSE EXCITATION AND PLC VOCAL-TRACT MODEL" 18 November 1990 , PROCEEDINGS OF THE INTERNATIONAL CONFERENCE ON SPOKEN LANGUAGE PROCESSING (ICSLP), KOBE, NOV. 18 -22, 1990, VOL. VOL. 2, PAGE(S) 1269 - 1272 , ACOUSTICAL SOCIETY OF JAPAN XP000506987 * page 1269, right-hand column - page 1271, left-hand column; figure 1 ***
 • **TOMOKO MATSUI ET AL: "TEXT-INDEPENDENT SPEAKER RECOGNITION USING VOCAL TRACT AND PITCH INFORMATION" 18 November 1990 , PROCEEDINGS OF THE INTERNATIONAL CONFERENCE ON SPOKEN LANGUAGE PROCESSING (ICSLP), KOBE, NOV. 18 - 22, 1990, VOL. VOL. 1, PAGE(S) 137 - 140 , ACOUSTICAL SOCIETY OF JAPAN XP000503333 * page 137, right-hand column, line 7 - page 138, right-hand column, line 18; figure 1 ***

**Description**

BACKGROUND OF THE INVENTION

1. Field of the Invention

The present invention relates to a speaker recognition system or similar apparatus which applies adaptive weighting to components in each frame of speech for normalizing the spectrum of speech, thereby reducing channel effects.

2. Description of the Related Art

The objective of a speaker identification system is to determine which speaker is present from an utterance. Alternatively, the objective of a speaker verification system is to verify the speaker's claimed identity from an utterance. Speaker identification and speaker verification systems can be defined in the general category of speaker recognition.

It is known that typical telephone switching systems often route calls between the same starting and ending locations on different channels. A spectrum of speech determined on each of the channels can have a different shape due to the effects of the channel. In addition, a spectrum of speech generated in a noisy environment can have a different shape than a spectrum of speech generated by the same speaker in a quiet environment. Recognition of speech on different channels or in a noisy environment is therefore difficult because of the variances in the spectrum of speech due to non-vocal tract components.

Conventional methods have attempted to normalize the spectrum of speech to correct for the spectral shape. U.S. Patent No. 5,001,761 describes a device for normalizing speech around a certain frequency which has a noise effect. A spectrum of speech is divided at the predetermined frequency. A linear approximate line for each of the divided spectrum is determined and approximate lines are joined at the predetermined frequency for normalizing the spectrum. This device has the drawback that each frame of speech is only normalized for the predetermined frequency having the noise effect and the frame of speech is not normalized for reducing non-vocal tract effects which can occur over a range of frequencies in the spectrum.

U.S. Patent No. 4,926,488 describes a method for normalizing speech to enhance spoken input in order to account for noise which accompanies the speech signal. This method generates feature vectors of the speech. A feature vector is normalized by an operator function which includes a number of parameters. A closest prototype vector is determined for the normalized vector and the operator function is altered to move the normalized vector closer to the closest prototype. The altered operator vector is applied to the next feature vector in the transforming thereof to a normalized vector. This patent has the limitation that it does not account for non-vocal tract effects which might occur over more than one frequency.

Speech has conventionally been modeled in a manner that mimics the human vocal tract. Linear predictive coding (LPC) has be used for describing short segments of speech using parameters which can be transformed into a spectrum of positions (frequencies) and shapes (bandwidths) of peaks in the spectral envelope of the speech segments. Cepstral coefficients represent the inverse Fourier transform of the logarithm of the power spectrum of a signal. Cepstral coefficients can be derived from the frequency spectrum or from linear predictive LP coefficients. Cepstral coefficients can be used as dominant features for speaker recognition. Typically, twelve cepstral coefficients are formed for each frame of speech.

It has been found that a reduced set of cepstral coefficients can be used for synthesizing or recognizing speech. U.S. Patent No. 5,165,008 describes a method for synthesizing speech in which five cepstral coefficients are used for each segment of speaker independent data. The set of five cepstral coefficients is determined by linear predictive analysis in order to determine a coefficient weighting factor. The coefficient weighting factor minimizes a non-squared prediction error of each element of a vector in the vocal tract resource space. The same coefficient weighting factors are applied to each frame of speech and do not account for non-vocal tract effects.

The closest prior art of the invention is disclosed in Hangai et al., "Speaker Identification Based on Multiple Excitation and LPC Vocal-Tract Model", ICSGP 90, pp. 1269-1272, which describes a quick technique for speaker identification using only some glotter were parameters combined with some LPL vocal tract parameters. For vocal signals, the vocal tract is modelled by an all-pole transfer function, for glottal signals, a multipulse excitation glottal model is used. speech intelligence can be used in such products as high performance speaker recognition apparatus.

The method involves the analysis of an analog speech signal by converting the analog speech signal to digital form to produce successive frames of digital speech. The frames of digital speech are respectfully analyzed utilizing linear predictive analysis to extract a spectrum of speech and a set of speech parameters known as prediction coefficients. The prediction coefficients have a plurality of poles of an all pole filter characterizing components of the frames of speech. Components of the spectrum can be normalized to enhance the contribution of the salient components based on its associated bandwidth. Adaptive component weightings are applied to the components of the spectrum to enhance the components associated with speech and to attenuate the components associated with non-speech effects. Cepstral coefficients are determined based on the normalized spectrum to provide enhanced features of the speech signal. Improved classification is performed in a speaker recognition system based on the enhanced features.

Preferably, the speaker recognition system of the present invention can be used for verifying the identity of a person over a telephone system for credit card transactions, telephone billing card transactions and gaining access to computer networks. In addition, the speaker recognition system can be used for voice activated locks for doors, voice activated car engines and voice activated computer systems.

The invention will be further understood by reference to the following drawings.

## BRIEF DESCRIPTION OF THE DRAWINGS

Fig.1 is a flow diagram of the system of the present invention during training of the system.

Fig. 2 is a flow diagram of the system of the present invention during speaker identification or verification.

Fig. 3 is a flow diagram of the method of the present invention for frame selection and feature extraction.

Fig. 4 is a block diagram of an experiment of the sensitivity of LP spectral component parameters having narrow and broad bandwidths with respect to a random single tap channel.

Fig. 5A is a histogram analysis for a broad bandwidth component $\omega_{bb}$.

Fig. 5B is a histogram analysis for a broad bandwidth component $B_{bb}$.

Fig. 5C is a histogram analysis for a broad bandwidth component $r_{bb}$.

Fig. 6A is a histogram analysis for a narrow bandwidth component $\omega_{nb}$.

Fig. 6B is a histogram analysis for a narrow bandwidth component $B_{nb}$.

Fg. 6C is a histogram analysis for a narrow bandwidth component $r_{nb}$.

Fig. 7A is a graph of the component of a prior art LP spectrum.

Fig. 7B is a graph of the components of the ACW spectrum.

Fig. 8A is a graph of the components of a prior art LP spectrum after processing through a single-tap channel having $(1-0.9z^{-1})$.

Fig.8B is a graph of the components of the ACW spectrum after processing through a single-tap channel having $(1-0.9z^{-1})$.

## DETAILED DESCRIPTION OF THE INVENTION

During the course of the description, like numbers will be used to identify like elements according to the different figures which illustrate the invention.

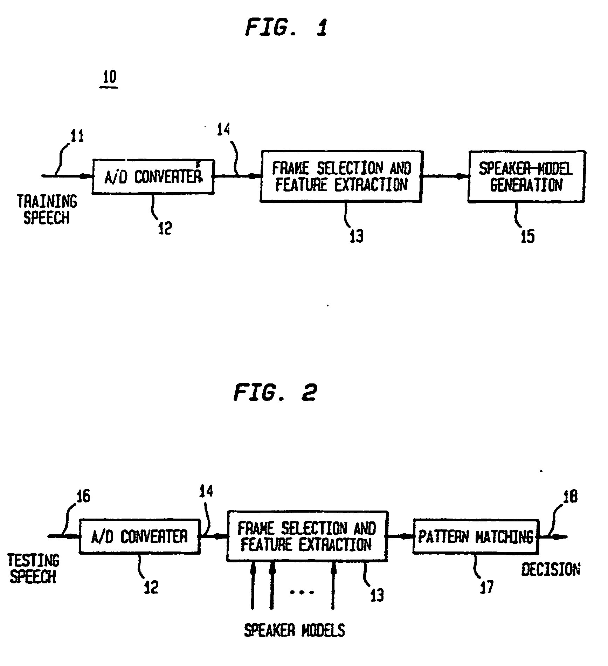

Fig. 1 illustrates a schematic diagram of speech recognition system IO during training of the system. A speech training input signal 11 is applied to an analog to digital converter 12 to provide successive frames of digital speech. Feature extraction module 13 receives the frames of digital speech. Feature extraction module 13 obtains characteristic parameters of the frames of digital speech. For speaker recognition, the features extracted in feature extraction module 13 are unique to the speaker to allow for adequate speaker recognition.

Speaker modeling is performed in block 15 by enhancing the features extracted in feature extraction module 13. Speaker modeling module 15 can also reduce the number of extracted features to the dominant features required for speaker recognition. Classification is performed on the enhanced features. Preferably, classification can be performed with a conventional technique of vector quantization in order to generate a universal code book for each speaker. In the alternative, classification can be performed by multilayer perceptions, neural networks, radial basis function networks and hidden Markov models. It will be appreciated that other classification methods which are known in the art could be used with the teachings of the present invention.

In Fig. 2, speaker recognition system 10 is shown for speaker identification or verification. A speech evaluation input signal 16 is digitized in analog to digital converter 12 and applied to feature extraction module 13. Enhanced features of the speech input signal are received at a pattern matching module 17. Pattern matching module 17 determines the closest match in the universal code book or typical dassification system for either determining the speaker's identification or for verifying that the speaker has an entry in the universal code book.

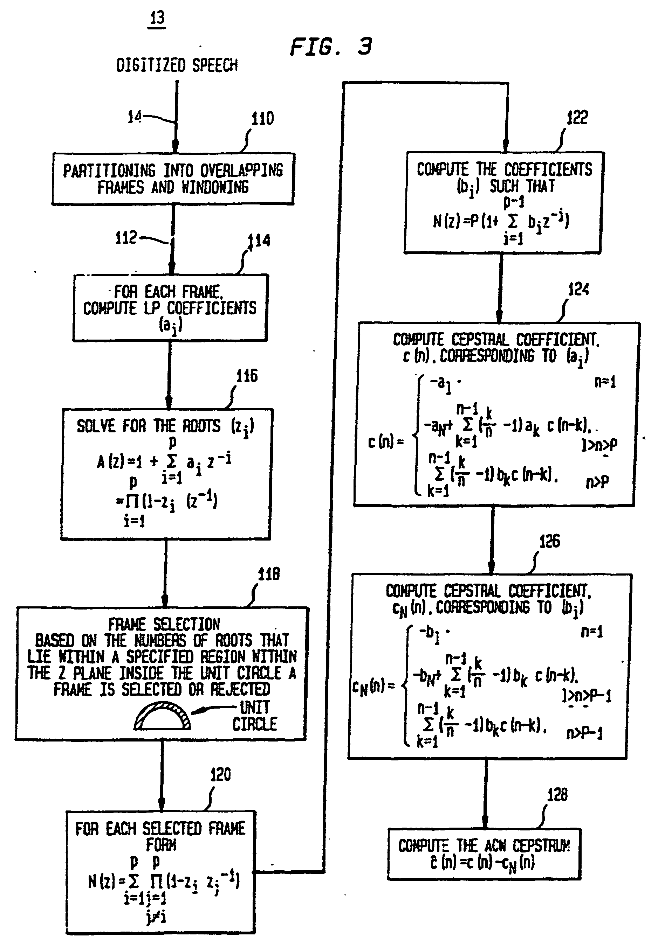

Fig. 3 illustrates a flow diagram of a preferred embodiment for the implementation of feature extraction block 13. A frame of speech s(k), can be represented by a modulation model (MM). Modulation model (MM) includes parameters which are representative of the number, N, of amplitude modulated (AM) and frequency modulated (FM) components. The frame of speech can be represented by the following formula:

$$s(k) = \sum_{i=1}^{N} A_i(k) \cos(\phi_i(k)) + \eta(k),$$

(100)

wherein $A_i(k)$ is the amplitude modulation of the $i^{th}$ component, $\Phi_i(k)$ is the instantaneous phase of the $i^{th}$ component, and $\eta(k)$ is the modeling error.

Amplitude modulation component $A_i(k)$ and instantaneous phase component $\Phi_i(k)$ are typically narrow band signals. Linear prediction analysis can be used to determine the modulation functions over a time interval of one pitch period to obtain:

$$A_i(k) = |G_i| e^{-B_i k}$$

(102)
and

$$\phi_i(k) = \omega_i k + \theta_i$$

(104)

wherein $G_i$ is the component gain, $B_i$ is the bandwidth, $\omega_i$ is the center frequency and $\ominus i$ is the relative delay.

Speech signal $s(k)$ is applied to block 112 to obtain linear predictive coding (LPC) coefficients in block 114. A LP polynomial $A(z)$ for a speech signal can be defined by the following equation:

$$A(z) = 1 + \sum_{i=1}^{P} a_i z^{-i}$$

(106)

wherein $a_i$ are linear prediction coefficients and P is the order of the coefficients.

In linear predictive coding analysis, the transfer function of the vocal tract can be modeled by a time varying all pole filter given by a Pth order LP analysis defined by the following:

$$H(z) = \frac{1}{A(z)} = \frac{1}{1 + \sum_{i=1}^{P} a_i z^{-i}}$$

(108)

The roots of $A(z)$ can be determined in block 116 by factoring the LP polynomial $A(z)$ in terms of its roots to obtain:

$$A(z) = \prod_{i=1}^{P} (1 - z_i z^{-1})$$

(110)

wherein $z_i$ are the roots of LP polynomial $A(z)$ and P is the order of the LP polynomial. In general, the roots of LP polynomial are complex and lie at a radial distance of approximately unity from the origin to the complex z-plane.

A new transfer function $\hat{H}(z)$ is determined to attenuate large bandwidth components corresponding to non-vocal tract effects and to emphasize small bandwidth components corresponding to speech.

$\hat{H}(z)$ can be represented in a form parallel to equation 108 by partial fraction expansion as:

$$\hat{H}(z) = \frac{1}{A(z)} = \sum_{i=1}^{P} \frac{r_i}{(1 - z_i z^{-1})}$$

(112)

wherein residues, $r_i$ represents the contribution of each component $(1 - z_i z^{-1})$ to the function $\hat{H}(z)$. Residues, $r_i$ represent the relative gain and phase offset of each component i which can be defined as the spectral tilt of the composite spectrum.

Frame selection block 118 selects or rejects speech frames 112 for further processing based on the number roots that lie within a specified region within the z-plane inside a unit circle.

In block 120 for each selected frame form $N(z) = \sum_{i=1}^{P} \prod_{\substack{j=1 \\ j \neq i}}^{P} (1 - z_i z_j^{-1})$. In block 122 compute the coefficients

$(b_i)$ such that $N(z) = P(1 + \sum_{i=1}^{P-1} b_i z^{-i})$. Normalizing residues, $r_i$ results in a proportionate contribution of each component i in the spectrum based on its bandwidth. Normalizing residues $r_i$ is performed by setting $r_i$ to a constant, such as unity. For example, if $r_i$ is set to unity the contribution of component i will be approximately:

(113)

$$\frac{1}{1 - |z_i|}$$

which is equivalent to the equation :

$$\approx \frac{1}{B_i}$$

(114)

From equation 114 it is shown that the contribution of each component i is inversely proportional to its bandwidth $B_i$ and if component i has a large bandwidth $B_i$, the value of equation 114 will be smaller than if component i has a small bandwidth $B_i$. Normalizing of residues $r_i$ can be defined as adaptive component weighting (ACW) which applies a weighting based on bandwidth to the spectrum components of each frame of speech in block 122.

Based on the above findings, a new transfer function $\hat{H}(z)$ based on ACW which attenuates the non-vocal tract components while increasing speech components is represented by the following equation:

$$\hat{H}(z) = \sum_{i=1}^{P} \frac{1}{(1 - z_i z^{-1})}$$

(115)

From equation 115, it is shown that $\hat{H}(z)$ is not an all pole transfer function $\hat{H}(z)$ has a moving average component (MA) of the order P-1 which normalizes the contribution of the speech components of the signal.

It is known in the art that cepstral coefficients are used as spectrum information as described in M.R Schroeder, Direct (nonrecursive) relations between cepstrals and predictor coefficients, Proc. IEEE 29:297-301, April 1981. Block 124 determines cepstral coefficient c(n) corresponding to LP coefficients $a_i$. Block 126 determines adaptive component weighting

$$c(n) = -a(n) + \sum_{k=1}^{n-1}\left(\frac{k}{n}-1\right)a_k c(n-k), l < n \leq P$$

$$c(n) = \sum_{k=1}^{n-1}\left(\frac{k}{n}-1\right)a(k)c(n-k), n > P.$$

cepstral coefficient $c_N(n)$ corresponding to adaptive component weighting coefficients $b_i$, $c_N(n)$ can be computed from the recursive relationship with the coefficients, $b_x$ of N(z) given in equation (7). This relationship is given by

$$c_N(1) = -b_1, \tag{12}$$

$$c_N(n) = -b_n + \sum_{k=1}^{n-1}\left(\frac{k}{n}-1\right)b_k c_N(n-k), l < n \leq P-1$$

$$c_N(n) = \sum_{k=1}^{n-1}\left(\frac{k}{n}-1\right)b_k c_N(n-k), n > P-1$$

Block 128 computes the ACW cepstrum. The ACW cepstrum $\hat{c}(n)$ can be defined as the inverse z transform of the natural logarithm of the ACW cepstrum, $\hat{H}(z)$.

$$\ln H(z) = -\ln(A(z)) - (-\ln(N)(z)) = \sum_{n=1}^{\infty}\hat{c}(n)z^{-n} \tag{13}$$

$$= \sum_{n=1}^{\infty}(c(n)z^{-n} - \sum_{n=1}^{\infty}c_N(n)z^{-n} \tag{14}$$

$$= \sum_{n=1}^{\infty}(c(n)-c_N(n))z^{-n} \tag{15}$$

Thus, the ACW cepstrum $\hat{c}(n)$ is given by

$$\hat{c}(n) = c(n) - c_N(n)$$

In an alternate embodiment, cepstral coefficients can be defined by the power sum of the poles normalized to the cepstral index in the following relationship:

$$\ln\left(\frac{1}{A(z)}\right) = \sum_{n=1}^{\infty}c_n z^{-n}$$

(116)

wherein $c_n$ is the cepstral coefficient.

Cepstral coefficients, $c_n$ can be expressed in terms of the root of the LP polynomial A(z) defined by equation 106 as:

$$c_n = \frac{1}{n} \sum_{i=1}^{P} Z_i$$

(117)

It is known that prediction coefficients $a_i$ are real. Roots of the LP polynomial A(z) defined by equation 106 will be either real or occur in complex conjugate pairs. Each root of LP polynomial A(z) is associated with the center frequency $\omega_i$ and the bandwidth $B_i$ in the following relationship:

$$Z_i = e^{-B_i + j\omega_i}$$

(118)

center frequency $\omega_i$ and bandwidth $B_i$ can be found as:

$$\omega_i = \arctan \frac{Im(z_i)}{Re(z_i)}$$

(120)

wherein $Im(Z_i)$ are imaginary roots and $Re(Z_i)$ are real roots and

$$B_i = -\ln |z_i|$$

(122)

Substitution of equation 118 into equation 117 results in cepstral coefficients for speech signal s(k) which can be defined as follows:

$$c_n = \frac{1}{n} \sum_{i=1}^{P} e^{-B_i n} \cos(\omega_i n)$$

(124)

wherein the $n^{th}$ cepstral $c_n$ coefficient is a non-linear transformation of the MM parameters. Quefrency index n corresponds to time variable k in formula 100 with relative delays $\Phi_i$, set to zero and relative gain $G_i$ set to unity.

From new transfer function $\hat{H}(z)$, a spectral channel and tilt filter N(z) can be determined. N(z) is a LP polynomial representative of channel and spectral tilt of the speech spectrum which can be defined as:

$$N(z) = 1 + \sum_{i=1}^{P-1} b_i z^{-1}$$

(126)

wherein b represents linear predictive coefficients and P is the order of the polynomial. A FIR filter which normalizes the speech component of the signal can be defined as:

$$\hat{H}(z) = \frac{N(z)}{A(z)}$$

(128)

Factoring LP polynomial N(z) as defined by equation 126 and A(z) as defined by equation II0 results in the new transfer function $\hat{H}(z)$ being defined as follows:

$$\hat{H}(z) = \frac{N(z)}{A(z)} = \frac{\prod_{i=1}^{P-1}(1 - \hat{z}_i z^{-1})}{\prod_{i=1}^{P}(1 - z_i z^{-1})}$$

(130)

wherein $z_i$ are the roots of the LP polynomial defined by equation 126.

A spectrum with adaptive component weighting (ACW) can be represented by its normalized cepstrum, $\hat{c}(n)$ by the following equation:

$$\hat{c}(n) = \frac{1}{n}\left(\sum_{i=1}^{P} z_i^n - \sum_{i=1}^{P-1} \hat{z}_i^n\right)$$

(132)

For each frame of digital speech, a normalized cepstrum $\hat{c}(n)$ is computed. Normalized cepstrum attenuates the non-vocal tract components and increases speech components of a conventional cepstral spectrum. The normalized cepstral spectrum determined can be used in feature extraction block 13 or pattern matching block 17.

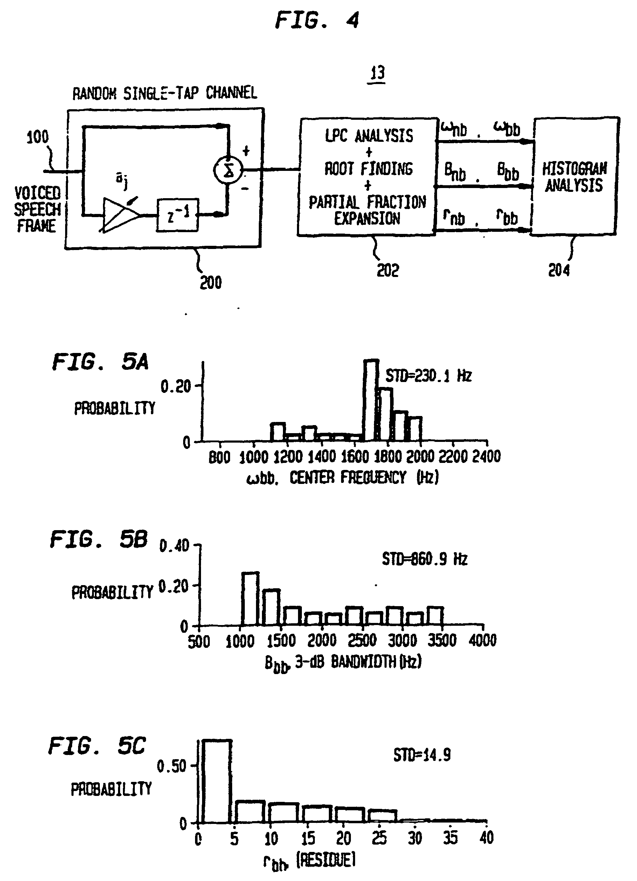

The sensitivity of the parameters ($\omega_i$, $B_i$, $r_i$) with respect to channel variations have been experimentally evaluated with the following experiment illustrated in Fig. 4.

A voiced frame of speech 100 is processed through a random single-tap channel 200 given by

$$\Theta_j(z) = 1 - a_j z^{-1}$$

The sequences of the parameters ($\omega_i$, $B_i$, $r_i$) are computed in block 202 for each $a_j$, j=1, 2 ..., J. Two sequences of parameters ($\omega_i$, $B_i$, $r_i$)) representing a narrow-bandwith (nb) component and a broad-bandwith (bb) component are selected. These components are denoted by ($\omega_{nb}, B_{nb}, r_{nb}$) and ($\omega_{bb}, B_{bb}, r_{bb}$) respectively. The sensitivity of the parameters of the selected narrow-bandwidth and broad-bandwidth components is evaluated by histogram analysis block 204.

For the broad bandwidth component, the histograms of the parameters $\omega_{bb}$, $B_{bb}$ and $r_{bb}$ are shown in Figs. 5A, 5B and 5C respectively. The broad-bandwidth histograms indicate that center frequencies $\omega_{bb}$, bandwidths $B_{bb}$ and residues $r_{bb}$ associated with broad-bandwidth components have large variances with respect to channel variations. The broad-bandwidth components introduce undesired variability to the LP spectrum which creates mismatches between features of similar speech signals processed through different channels.

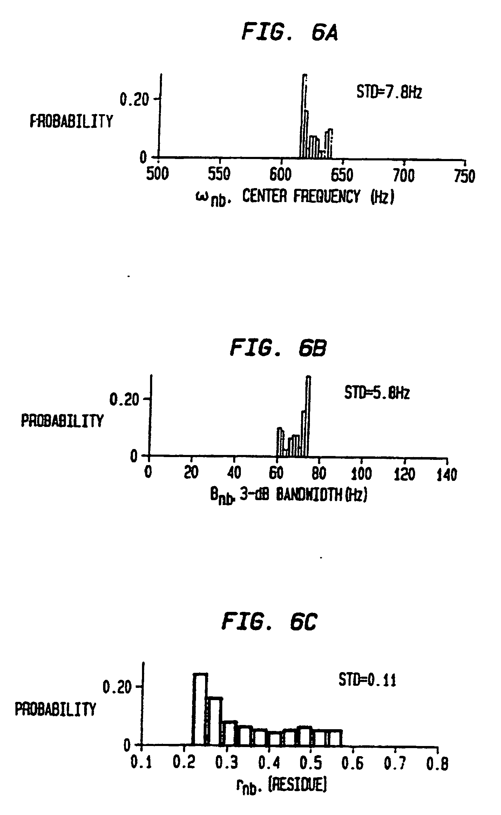

For the narrow-bandwidth component, the histograms of the parameters $\omega_{nb}$, $B_{nb}$, $r_{nb}$ are shown in Figs. 6A, 6B and 6C respectively. The narrow bandwidth histograms indicate that center frequencies $\omega_{nb}$ and bandwidths $B_{nb}$ associated with narrow-bandwidth components are relatively invariant with channel variations since the histograms show very small variances. The residues associated with narrow bandwidth components demonstrate large variances.

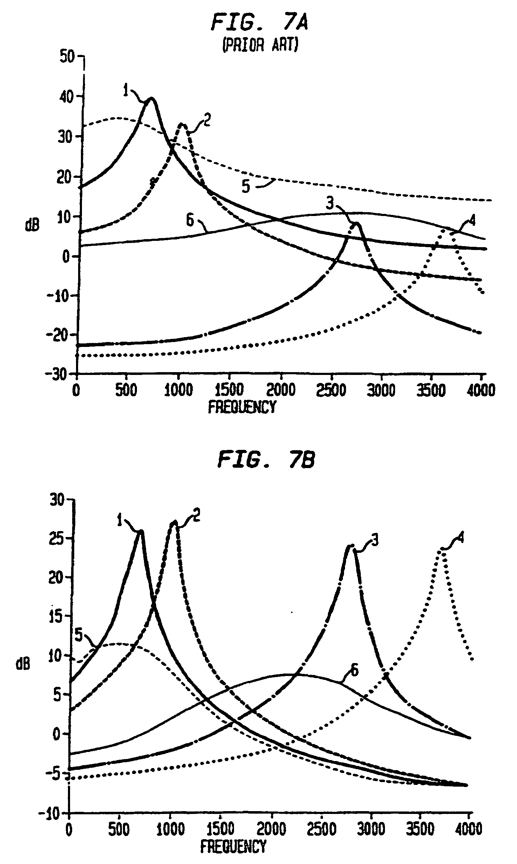

Fig. 7A illustrates decomposition of a prior art spectrum of speech for a speaker over a channel from the transfer function H(z). Components labeled I-4 represent resonances of the vocal tract. A peak in the resonance occurs at a center frequency labeled $\omega_1$-$\omega_4$. Each resonance has a respective bandwidth labeled $B_1$-$B_4$. Components labeled 5 and 6 represent non-vocal tract effects. Fig.7A shows that bandwidths labeled Bs and Be representing non-vocal tract effects are much greater than the bandwidths labeled $B_1$-$B_4$ for speech components.

Fig. 7B illustrates a decomposition of the spectrum of speech shown in Fig.4 after application of adaptive component weighting transfer function $\hat{H}(z)$. In Fig. 7B, peaks of component 1-4 are emphasized and peaks of components 5 and 6 are attenuated.

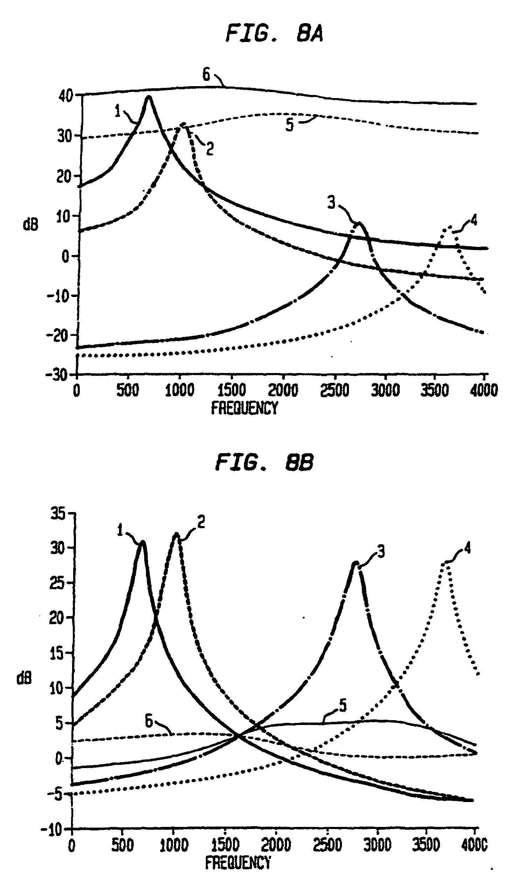

Fig. 8A illustrates a prior art spectrum of a speech signal including vocal and non-vocal tract components. Fig. 8B illustrates a spectrum of a speech signal after application of a adaptive component weighting filter. Fig.8B normalizes peaks 1-4 to a value of approximately 30db for emphasizing the speech components of the signal.

A text independent speaker identification example was performed. A subset of a DARPA TIMIT database representing 38 speakers of the same (New England) dialect was used. Each speaker performed ten utterances having an average duration of three seconds per utterance. Five utterances were used for training system 10 in block 16 and five utterances were used for evaluation in block 18. A first set of cepstral features derived from transfer function H(z) were compared to a second set of cepstral features derived from adaptive component weighting transfer function H(z).

Training and testing were performed without channel effects in the speech signal. The first set features of cepstral features from H(z) and the second set of cepstral from $\hat{H}(z)$ had the same recognition rate of 93%.

Training and testing was performed with a speech signal including a channel effect in which the channel is simulated by the transfer function ($1-0.9z^{-1}$). The first set of cepstral features determined from H(z) had a recognition rate of 50.1%. The second set of cepstral features determined from $\hat{H}(z)$ had a recognition rate of 74.7%. An improvement of 24.6% in the recognition rate was found using cepstral features determined by adaptive component weighting.

The present invention has the advantage of improving speaker recognition over a channel or the like by improving the features of a speech signal. Non-vocal tract components of the speech signal are attenuated and vocal tract components are emphasized. The present invention is preferably used for speaker recognition over a telephone system or in noisy environments.

While the invention has been described with reference to the preferred embodiment, this description is not intended to be limiting. It will be appreciated by those of ordinary skill in the art that modifications may be made without departing from scope of the invention as defined in the appended claims.

**Claims**

1. A method for speaker recognition comprising the steps of:

   windowing (110) a speech signal into a plurality of speech frames;
   determining (114) linear prediction coefficients ($a_i$) for each said frame of speech, wherein the linear prediction coefficients correspond to the LP polynomial (A(z)) representing the denominator of an all pole filter modeling the transfer function (H(z)) of the vocal tract;
   determining (124) first cepstral coefficient (c(n)) from said linear prediction coefficients ($a_i$);
   determining (116) the roots of said all pole filter ($z_i$);
   selecting (118) one of said frames having a predetermined number of said roots within a specified region in the z plane within the unit circle;
   for each selected frame, executing the following steps:

   a) obtaining (116) residuals ($r_i$) as numerators resulting from a partial fraction expansion ($\hat{H}(z)$) of said transfer function (H(z)) of the vocal tract;
   b) emphasizing the speech formants of said speech signal and attenuating residue components, by normalizing (120) said residuals ($r_i$);
   c) determining (122) a finite impulse response filter (N(z)), corresponding to the numerator of the thus modified transfer function of the vocal tract, wherein the denominator of the modified transfer function is the LP polynomial (A(z));
   d) determining (126) second cepstral coefficients ($C_N(n)$) from the coefficients ($b_i$) of said finite impulse response filter (N(z));
   e) subtracting (128) said second cepstral coefficients ($C_N(n)$) from said first cepstral coefficients (c(n)) for forming an adaptive component weighting cepstrum ($\hat{c}(n)$);

   recognizing said adaptive component weighting cepstrum by calculating similarity of said adaptive component weighting cepstrum and a plurality
   of speech patterns which were produced by a plurality of speaking persons in advance.

2. The method of claim 1 further comprising the step of:

   classifying said adaptive component weighting cepstrum in a classification means as said plurality of speech patterns.

**3.** The method of claim 2 further comprising the step of:

determining said similarity of said adaptive component weighting cepstrum with said speech patterns by matching said adaptive component weighting cepstrum with said classified adaptive component weighting cepstrum in said classification means.

**4.** A system for speaker recognition comprising:

means for windowing (110) a speech signal into a plurality of speech frames;
means for determining (114) linear prediction coefficients ($a_i$) for each said frame of speech, wherein the linear prediction coefficients correspond to the LP polynomial (A(z)) representing the denominator of an all pole filter modeling the transfer function (H(z)) of the vocal tract;
means for determining (124) first cepstral coefficient (c(n)) from said linear prediction coefficients ($a_i$);
means for determining (116) the roots of said all pole filter ($z_i$);
means for selecting (118) one of said frames having a predetermined number of said roots within a specified region in the z plane within the unit circle;
means for executing for each selected frame, the following steps:

a) obtaining (116) residuals ($r_i$) as numerators resulting from a partial fraction expansion ($\hat{H}(z)$) of said transfer function (H(z)) of the vocal tract;
b) emphasizing the speech formants of said speech signal and attenuating residue components, by normalizing (120) said residuals ($r_i$);
c) determining (122) a finite impulse response filter (N(z)), corresponding to the numerator of the thus modified transfer function of the vocal tract, wherein the denominator of the modified transfer function is the LP polynomial (A(z));
d) determining (126) second cepstral coefficients ($c_N(n)$) from the coefficients ($b_i$) of said finite impulse response filter (N(z));
e) subtracting (128) said second cepstral coefficients ($C_N(n)$) from said first cepstral coefficients (c(n)) for forming an adaptive component weighting cepstrum ($\hat{c}(n)$);

means for recognizing said adaptive component weighting cepstrum by calculating similarity of said adaptive component weighting cepstrum and
a plurality of speech patterns which were produced by a plurality of speaking persons in advance.

**5.** The system of claim 4 further comprising:

means for classifying said adaptive component weighting cepstrum as a plurality of speech patterns.

**Patentansprüche**

**1.** Verfahren zur Sprechererkennung, das die Schritte umfasst:

Fensteraufteilung (110) eines Sprachsignals in eine Vielzahl von Sprachrahmen;
Bestimmen (114) linearer Vorhersagekoeffizienten ($a_i$) für jeden Sprachrahmen, wobei die linearen Vorhersagekoeffizienten dem LP-Polynom (A(z))entsprechen, das den Nenner eines Allpol-Filters darstellt, das die Übertragungsfunktion (H(z)) des Vokaltrakts modelliert;
Bestimmen (124) des ersten Cepstral-Koeffizienten (c(n)) aus den linearen Vorhersagekoeffizienten ($a_i$);
Bestimmen (116) der Wurzeln des Allpol-Filters ($z_i$);
Auswählen (118) eines der Rahmen, der eine vorgegebene Anzahl der Wurzeln in einem festgelegten Bereich in der z-Ebene innerhalb des Einheitskreises aufweist;
für jeden ausgewählten Rahmen Ausführen der folgenden Schritte:

a) Beschaffen (116) der Residuen ($r_i$) als den Zählern, die sich aus einer Partialbruchentwicklung ($\bar{H}(z)$) der Übertragungsfunktion (H(z)) des Vokaltrakts ergeben;
b) Hervorheben der Sprachformanten des Sprachsignals und Abschwächen der Restkomponenten durch Normieren (120) der Residuen ($r_i$);
c) Bestimmen (122) eines Filters mit endlicher Impulsantwort (finite impulse response filter) (N(z)), der dem Zähler der so modifizierten Übertragungsfunktion des Vokaltrakts entspricht, wobei der Nenner der modifizierten Übertragungsfunktion das LP-Polynom (A(z)) ist;
d) Bestimmen (126) zweiter Cepstral-Koeffizienten ($c_N(n)$) aus den Koeffizienten ($b_i$) des Filters mit endlicher Impulsantwort (finite impulse response filter) (N(z)) ;
e) Subtrahieren (128) der zweiten Cepstral-Koeffizienten ($C_N(n)$) von den ersten Cepstral-Koeffizienten (c(n)) zum Ausbilden eines adaptiven Komponentengewichtungs-Cepstrums ($\overline{c}(n)$);

Erkennen des adaptiven Komponentengewichtungs-Cepstrums durch Berechnen der Ähnlichkeit des adaptiven Komponentengewichtungs-Ceptrums und einer Vielzahl von Sprachmustern, die durch eine Vielzahl von sprechenden Personen im Voraus erzeugt wurden.

2. Verfahren nach Anspruch 1, das ferner den Schritt umfasst:

Klassifizieren des adaptiven Komponentengewichtungs-Cepstrums in einem Klassifikationsmittel als die Vielzahl von Sprachmustern.

3. Verfahren nach Anspruch 2, das ferner den Schritt umfasst:

Bestimmen der Ähnlichkeit des adaptiven Komponentengewichtungs-Cepstrums mit den Sprechmustern durch Abstimmen des adaptiven Komponentengewichtungs-Cepstrums mit dem klassifizierten adaptiven Komponentengewichtungs-Cepstrum in dem Klassifikationsmittel.

4. System zur Sprechererkennung, das umfasst:

Mittel zur Fensteraufteilung (110) eines Sprachsignals in eine Vielzahl von Sprachrahmen;
Mittel zum Bestimmen (114) linearer Vorhersagekoeffizienten ($a_i$) für jeden Sprachrahmen, wobei die linearen Vorhersagekoeffizienten dem LP-Polynom (A(z))entsprechen, das den Nenner eines Allpol-Filters darstellt, das die Übertragungsfunktion (H(z)) des Vokaltrakts modelliert;
Mittel zum Bestimmen (124) des ersten Cepstral-Koeffizienten (c(n)) aus den linearen Vorhersagekoeffizienten ($a_i$);
Mittel zum Bestimmen (116) der Wurzeln des Allpol-Filters ($z_i$);
Mittel zum Auswählen (118) eines der Rahmen, der eine vorgegebene Anzahl der Wurzeln in einem festgelegten Bereich in der z-Ebene innerhalb des Einheitskreises aufweist;
für jeden ausgewählten Rahmen Mittel zum Ausführen der folgenden Schritte:

a) Beschaffen (116) der Residuen ($r_i$) als den Zählern, die sich aus einer Partialbruchentwicklung ($\overline{H}(z)$) der Übertragungsfunktion (H(z)) des Vokaltrakts ergeben;
b) Hervorheben der Sprachformanten des Sprachsignals und Abschwächen der Restkomponenten durch Normieren (120) der Residuen ($r_i$) ;
c) Bestimmen (122) eines Filters mit endlicher Impulsantwort (finite impulse response filter) (N(z)), der zu dem Zähler der so modifizierten Übertragungsfunktion des Vokaltrakts gehört, wobei der Nenner der modifizierten Übertragungsfunktion das LP-Polynom (A(z)) ist;
d) Bestimmen (126) zweiter Cepstral-Koeffizienten ($C_N(n)$) aus den Koeffizienten ($b_i$) des Filters mit endlicher Impulsantwort (finite impulse response filter) (N(z)) ;
e) Subtrahieren (128) der zweiten Cepstral-Koeffizienten ($C_N(n)$) von den ersten Cepstral-Koeffizienten (c(n)) zum Ausbilden eines adaptiven Komponentengewichtungs-Cepstrums ($\overline{c}(n)$);

Mittel zum Erkennen des adaptiven Komponentengewichtungs-Cepstrums durch Berechnen der Ähnlichkeit des adaptiven Komponentengewichtungs-Cepstrums und einer Vielzahl von Sprachmustern, die durch eine Vielzahl von sprechenden Personen im Voraus erzeugt wurden.

5. System nach Anspruch 4, das ferner umfasst:

Mittel zum Klassifizieren des adaptiven Komponentengewichtungs-Cepstrums als eine Vielzahl von Sprachmustern.

**Revendications**

1. Procédé de reconnaissance du locuteur comprenant les étapes consistant à :

fenêtrer (110) un signal de parole en une pluralité de trames de parole ;
déterminer (114) des coefficients de production linéaires ($a_i$) pour chacune desdites trames de parole, où les coefficients de prédiction linéaire correspondent à l'algorithme polynomial LP ($A(z)$) représentant le dénominateur d'un filtre tous-pôles modélisant la fonction de transfert ($H(z)$) du tract vocal ;
déterminer (124) un premier coefficient cepstral ($c(n)$) à partir desdits coefficients de prédiction linéaire ($a_i$) ;
déterminer (116) les racines dudit filtre tous-pôles ($z_i$) ;
sélectionner (118) une parmi lesdites trames ayant un nombre prédéterminé desdites racines à l'intérieur d'une région spécifiée dans le plan z à l'intérieur du cercle d'unité ;
pour chaque trame sélectionnée, les étapes suivantes sont exécutées :

a) obtenir (116) des résidus ($r_i$) en tant que numérateurs résultant d'une extension partielle de fraction ($\hat{H}(z)$) de ladite fonction de transfert ($H(z)$) du tract vocal ;
b) accentuer les formants de parole dudit signal de parole et atténuer des composants de résidus en normalisant (120) lesdits résidus ($r_i$) ;
c) déterminer (122) un filtre de réponse à impulsion finie ($N(z)$), correspondant au numérateur de la fonction de transfert ainsi modifiée du tract vocal, dans lequel le dénominateur de la fonction de transfert modifiée est l'algorithme polynomial LP ($A(z)$) ;
d) déterminer (126) des seconds coefficients cepstraux ($C_N(n)$) à partir des coefficients ($b_i$) dudit filtre de réponse à impulsion finie ($N(z)$) ;
e) soustraire (128) lesdits seconds coefficients cepstraux ($c_N(n)$) desdits premiers coefficients cepstraux ($c_N(n)$) pour former un cepstre de pondération de composant adaptative ($c(n)$) ;

reconnaître ledit cepstre de pondération de composant adaptative en calculant une similarité dudit cepstre de pondération de composant adaptative et une pluralité de profils de parole qui ont été produits par une pluralité de locuteurs à l'avance.

2. Procédé selon la revendication 1, comprenant en outre l'étape consistant à :

classifier ledit cepstre de pondération de composant adaptative dans un moyen de classification en tant que ladite pluralité de profils de parole.

3. Procédé selon la revendication 2, comprenant en outre l'étape consistant à :

déterminer ladite similarité dudit cepstre de pondération de composant adaptative avec lesdits profils de parole en appariant ledit cepstre de pondération de composant adaptative audit cepstre de pondération de composant adaptative classifié dans ledit moyen de classification.

4. Système pour une reconnaissance du locuteur comprenant :

un moyen destiné à fenêtrer (110) un signal de parole en une pluralité de trames de parole ;
un moyen destiné à déterminer (114) des coefficients de prédiction ($a_i$) pour chacune desdites trames de parole, où les coefficients de prédiction linéaire correspondent à l'algorithme polynomial LP ($A(z)$) représentant le dénominateur d'un filtre tous-pôles modélisant la fonction de transfert ($H(z)$) du tract vocal ;
un moyen destiné à déterminer (124) un premier coefficient cepstral ($c(n)$) desdits coefficients de prédiction linéaire ($a_i$) ;
un moyen destiné à déterminer (116) les racines dudit filtre tous-pôles ($z_i$) ;
un moyen destiné à sélectionner (118) une parmi lesdites trames ayant un nombre prédéterminé desdites racines à l'intérieur d'une région spécifiée dans le plan z à l'intérieur du cercle d' unité ;
un moyen destiné à exécuter, pour chaque trame sélectionnée, les étapes suivantes :

a) obtenir (116) des résidus ($r_i$) en tant que numérateurs résultant d'une extension partielle de fraction ($\hat{H}(z)$) de ladite fonction de transfert ($H(z)$) du tract vocal ;
b) accentuer des formants de parole dudit signal de parole et atténuer des composants de résidus, en normalisant (120) lesdits résidus ($r_i$) ;

c) déterminer (122) un filtre de réponse à impulsion finie (N(z)), correspondant au numérateur de la fonction de transfert ainsi modifiée du tract vocal, dans lequel le dénominateur de la fonction de transfert modifiée est l'algorithme polynomial LP (A(z));

d) déterminer (126) des seconds coefficients cepstraux ($C_N(n)$) à partir des coefficients ($b_i$) dudit filtre de réponse à impulsion finie (N(z)) ;

e) soustraire (128) lesdits seconds coefficients cepstraux ($c_N(n)$) desdits premiers coefficients cepstraux (c(n)) pour former un cepstre de pondération de composant adaptative ($\hat{c}(n)$) ;

un moyen destiné à reconnaître ledit cepstre de pondération de composant adaptative en calculant une similarité dudit cepstre de pondération de composant adaptative et une pluralité de profils de parole qui ont été produits par une pluralité de locuteurs à l'avance.

5. Système selon la revendication 4 comprenant en outre :

un moyen destiné à classifier ledit cepstre de pondération de composant adaptative en tant qu'une pluralité de profils de parole.

## FIG. 1

## FIG. 2

## FIG. 3

<u>13</u>

DIGITIZED SPEECH

14 ─── 110

PARTITIONING INTO OVERLAPPING
FRAMES AND WINDOWING

112 ─── 114

FOR EACH FRAME,
COMPUTE LP COEFFICIENTS
$(a_i)$

116

SOLVE FOR THE ROOTS $(z_i)$
$$A(z) = 1 + \sum_{i=1}^{p} a_i z^{-i}$$
$$= \prod_{i=1}^{p}(1 - z_i(z^{-1})$$

118

FRAME SELECTION
BASED ON THE NUMBERS OF ROOTS THAT
LIE WITHIN A SPECIFIED REGION WITHIN
THE Z PLANE INSIDE THE UNIT CIRCLE A
FRAME IS SELECTED OR REJECTED
─── UNIT CIRCLE

120

FOR EACH SELECTED FRAME
FORM
$$N(z) = \sum_{i=1}^{p} \prod_{\substack{j=1 \\ j \neq i}}^{p}(1 - z_j z_j^{-1})$$

122

COMPUTE THE COEFFICIENTS
$(b_i)$ SUCH THAT
$$N(z) = P(1 + \sum_{i=1}^{p-1} b_i z^{-i})$$

124

COMPUTE CEPSTRAL COEFFICIENT,
$c(n)$, CORRESPONDING TO $(a_i)$
$$c(n) = \begin{cases} -a_1 & n=1 \\ -a_N + \sum_{k=1}^{n-1}(\frac{k}{n}-1) a_k\, c(n-k), & 1 > n > P \\ \sum_{k=1}^{n-1}(\frac{k}{n}-1) b_k c(n-k), & n > P \end{cases}$$

126

COMPUTE CEPSTRAL COEFFICIENT,
$c_N(n)$, CORRESPONDING TO $(b_i)$
$$c_N(n) = \begin{cases} -b_1 & n=1 \\ -b_N + \sum_{k=1}^{n-1}(\frac{k}{n}-1) b_k\, c(n-k), & 1 > n > P-1 \\ \sum_{k=1}^{n-1}\frac{k}{n}-1) b_k c(n-k), & n > P-1 \end{cases}$$

128

COMPUTE THE ACW CEPSTRUM
$\hat{c}(n) = c(n) - c_N(n)$

## FIG. 4

<u>13</u>

RANDOM SINGLE-TAP CHANNEL

100

VOICED
SPEECH
FRAME

$\bar{a}_j$

$z^{-1}$

$\Sigma$   +
         −

200

LPC ANALYSIS
+
ROOT FINDING
+
PARTIAL FRACTION
EXPANSION

202

$\omega_{nb}$ . $\omega_{bb}$

$B_{nb}$ . $B_{bb}$

$r_{nb}$ . $r_{bb}$

HISTOGRAM
ANALYSIS

204

## FIG. 5A

PROBABILITY

0.20

0

STD=230.1 Hz

800 1000 1200 1400 1600 1800 2000 2200 2400
$\omega_{bb}$. CENTER FREQUENCY (Hz)

## FIG. 5B

PROBABILITY

0.40

0.20

0

STD=860.9 Hz

500 1000 1500 2000 2500 3000 3500 4000
$B_{bb}$ 3-dB BANDWIDTH (Hz)

## FIG. 5C

PROBABILITY

0.50

0

STD=14.9

0 5 10 15 20 25 30 35 40
$r_{bb}$ (RESIDUE)

*FIG. 6A*

*FIG. 6B*

*FIG. 6C*

## FIG. 7A
### (PRIOR ART)

## FIG. 7B

## FIG. 8A

## FIG. 8B